# EUROPÄISCHE PATENTSCHRIFT

(11) **EP 2 988 859 B1**
(45) Veröffentlichungstag und Bekanntmachung des Hinweises auf die Patenterteilung: **02.10.2019**
(21) Anmeldenummer: 14707389.4
(22) Anmeldetag: 28.02.2014
(51) Int. Cl.: B01J 12/00, C01B 33/04, C07F 7/02, B01J 19/08, C07F 7/08

(54) **VERFAHREN UND VORRICHTUNG ZUR HERSTELLUNG VON POLYSILANEN**
PROCESS AND APPARATUS FOR PREPARATION OF POLYSILANES
PROCÉDÉ ET DISPOSITIF DE PRODUCTION DE POLYSILANES

(30) Priorität: 24.04.2013 DE 102013207443
(43) Veröffentlichungstag der Anmeldung: 02.03.2016
(73) Patentinhaber: Evonik Degussa GmbH, 45128 Essen (DE)
(72) Erfinder: LANG, Jürgen Erwin, 76229 Karlsruhe (DE); RAULEDER, Hartwig, 79618 Rheinfelden (DE); MÜH, Ekkehard, 79618 Rheinfelden (DE)
(74) Vertreter: Evonik Patent Association
(86) Internationale Anmeldenummer: PCT/EP2014/053943
(87) Internationale Veröffentlichungsnummer: WO 2014/173569

(56) Entgegenhaltungen:
- EP-A2- 0 268 756
- FR-A1- 2 743 554
- US-A- 4 604 274
- US-A- 5 505 913

## Beschreibung

Die Erfindung betrifft ein Verfahren zur Herstellung von Polysilanen durch Umsetzung von Monosilan in Gegenwart von Wasserstoff in einem Plasma sowie eine Anlage zur Durchführung dieses Verfahrens.

In der Mikroelektronik wird Disilan zur Abscheidung von Silizium-Schichten eingesetzt, das allerhöchsten Reinheitsanforderungen genügen muss. Bislang sind jedoch nur Verfahren bekannt, bei denen Katalysatoren zum Einsatz kommen. So offenbart die JP 02-184513 ein Verfahren zur Herstellung von Disilan unter Verwendung von metallorganischen Katalysatoren basierend auf Platin, Rhodium oder Ruthenium-Komplexkatalysatoren mit organischen Phosphor-, Arsen- oder Antimonliganden. Diese Katalysatoren tragen zu einer Kontamination im ppb-Bereich des hergestellten Disilans bei und werden zunehmend kritisch bei Ihrer Entsorgung beurteilt.

Die WO 2008/098640 A2 offenbart ein Verfahren zur Herstellung von Hexachlordisilan, das in einem zweiten Verfahrensschritt katalytisch zu Disilan hydriert werden kann. Dieses zweistufige Verfahren ist nicht für die kostengünstige Herstellung von hochreinem Disilan geeignet.

Aus der DE 36 39 202 ist ein weiteres Verfahren zur Herstellung von Disilan mit dem Nachteil einer Bildung von signifikanten Mengen an elementarem Silizium während der Herstellung von Disilan bekannt. Der Reaktor kann in diesem Verfahren nur diskontinuierlich betrieben werden und muss nach sehr kurzen Produktionszeiten aufwendig gereinigt werden. Ein weiterer Nachteil besteht in den hohen Ausbeuteverlusten, die einerseits durch die Siliziumabscheidung und anderseits durch Verluste an Disilan oder Trisilan aufgrund von Strippeffekten bei der Abtrennung von Wasserstoff aus den Reaktionsprodukten entstehen. Diese Ausbeuteverluste können zwar bei einer Synthese über Hexachlordisilan vermieden werden, jedoch kommt es durch die katalytische Hydrierung wiederum zu einer Kontamination des Disilans und Trisilans.

Die Patentanmeldung EP 0268756 A2 offenbart ein Verfahren zur Herstellung von Disilan aus Monosilan, bei dem ein Gemisch aus Monosilan und Wasserstoff einer Plasmaentladung ausgesetzt wird.

In FR 2743554 A1 wird ein Herstellungsverfahren von Disilan vorgestellt, indem ein gasförmiges Gemisch, das Monosilan enthält, einer elektrischen Entladung ausgesetzt und das Disilan in einem kryogenischen Schritt abgetrennt wird.

US 4604274 B beschreibt eine Konversionsmethode von Silanen zu Disilan durch Bestrahlung der Silane mit infrarotem Laserlicht.

Disilane werden auch gewonnen, indem gasförmiges Monosilan durch einen Reaktionsraum geleitet wird, in dem eine Plasmaentladung stattfindet. Dies ist in der Patentschrift US 5505913 B offenbart.

Aufgabe der vorliegenden Erfindung war die Bereitstellung eines Verfahrens und einer Anlage, die die genannten Nachteile des Standes der Technik vermeidet und vorzugsweise eine kontinuierliche Herstellung von Polysilanen erlaubt. Ferner sollten die Polysilane bereits als Gemisch in hoher- bis höchster Reinheit isoliert werden können. Vorzugsweise sollten eine Auftrennung der Polysilane nur noch mit dem Zweck einer Erhöhung des Gehaltes der reinen Polysilane und nicht primär einer Aufreinigung dienen. Zudem bestand die Aufgabe, ein besonders wirtschaftliches Verfahren im technischen Maßstab bereitzustellen.

Gelöst werden die Aufgaben durch das erfindungsgemäße Verfahren sowie durch die erfindungsgemäße Anlage gemäß den Merkmalen der Patentansprüche 1 und 14.

Überraschend wurde festgestellt, dass zur selektiven Herstellung von Polysilanen Gasphasenbehandlungen eines Strom von Eduktens umfassend Monosilan mit definiertem Monosilanpartialdruck im Gasgemisch in Gegenwart von Wasserstoff in nicht-thermischen Plasmen bei Temperaturen unter 40 °C und vorzugsweise vermindertem Druck genutzt werden können.

Gegenstand der Erfindung ist somit ein Verfahren zur Herstellung von Polysilanen mit mindestens zwei über eine kovalente Einfachbindung aneinander gebundenen Siliziumatomen (Si-Si), insbesondere Gemischen an linearen, verzweigten und/oder cyclischen Polysilanen ausgewählt aus Disilan, Trisilan, Tetrasilan, Pentasilan, Hexasilan, Heptasilan, Octasilan, Nonasilan, Decasilan, Undecasilan, Dodecasilan und/oder deren Strukturisomeren, bevorzugt von Polysilanen der nachfolgenden allgemeinen Formeln II, III, IV und/oder V, indem
i) ein Strom von Edukten umfassend Monosilan der allgemeinen Formel I und Wasserstoff, 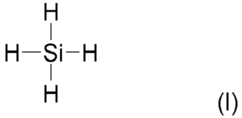 und der Strom von Edukten ein Verhältnis an Wasserstoff und Monosilan in Volumenprozent (Vol.-%) von 15:1 bis 1 : 5 aufweist,
ii) mindestens einer Gasentladung, vorzugsweise zwei bis zehn nicht-thermischen Plasmen, ausgesetzt wird, bevorzugt bei einem Druck zwischen 0,05 mbar_{abs.} bis 15000 mbar_{abs.}, besonders bevorzugt bei vermindertem Druck, und
iii) in der resultierenden Phase ein definiertes Verhältnis des Wasserstoffpartialdrucks zum Partialdruck der unter den gewählten Bedingungen gasförmigen Silane eingestellt wird, und in der resultierenden Phase das definierte Verhältnis des Wasserstoffpartialdrucks zum Partialdruck der unter den gewählten Bedingungen gasförmigen Silane mittels einer Wasserstoff durchlässigen Membran eingestellt wird,
und gleichfalls in Schritt iii) Polysilane aus der resultierenden Phase gewonnen werden, insbesondere Polysilangemische, bevorzugt lineare, verzweigte und/oder cyclische Polysilane mit 2 bis 25 Siliziumatomen, vorzugsweise mit 4 bis 25 Siliziumatomen, wie Tetrasilan, Pentasilan, Hexasilan, Heptasilan, Octasilan, Nonasilan, Decasilan, Undecasilan, Dodecasilan und/oder deren Strukturisomere, wobei es besonders bevorzugt ist, wenn in Schritt iii) zunächst die Polysilane gewonnen werden und anschließend in der resultierenden Phase ein definiertes Verhältnis des Wasserstoffpartialdrucks zum Partialdruck der unter den gewählten Bedingungen gasförmigen Silane, insbesondere des Monosilans sowie gegebenenfalls des Disilans, eingestellt wird, und anschließend iv) das Polysilangemisch aufgetrennt wird, insbesondere wird es mittels Destillation, fraktionierter Kondensation und/oder chromatographisch aufgetrennt. Besonders bevorzugt wird das Polysilangemisch mittels fraktionierter Destillation in einem Mehrkolonnensystem in die einzelnen Polysilane aufgetrennt. Im Rahmen der Erfindung werden unter dem Begriff Silan sowohl Monosilan als auch die Polysilane erfasst, während als Polysilan nur Silane mit mindestens zwei Siliziumatomen, vorzugsweise mit mindestens vier Siliziumatomen gelten.

Die Einstellung der Partialdrücke geschieht erfindungsgemäß mittels einer Wasserstoff durchlässigen Membran, die vorzugsweise nur für Wasserstoff und im Wesentlichen nicht für Silane permeabel ist. Im Schritt iii) wird ein Polysilangemisch aus der resultierenden Phase gewonnen, und in der resultierenden Phase das definierte Verhältnis des Wasserstoffpartialdrucks zum Partialdruck der unter den gewählten Bedingungen gasförmigen Silane mittels einer Wasserstoff durchlässigen Membran eingestellt.

Der Begriff Polysilan umfasst die homologe Reihe der rein Wasserstoff substituierten Silane gemäß IUPAC-Nomenklatur, die als erfindungsgemäße Polysilane mindestens zwei miteinander kovalent verknüpfte Si-Atome (Si-Si) aufweisen. Die Polysilane weisen ein ausschließlich mit Wasserstoffatomen substituiertes Silizium-Grundgerüst auf und umfassen lineare, verzweigte und/oder cyclische Polysilane, wie n-Polysilane, iso-Polysilane, neo-Polysilane und/oder cyclo-Polysilane. Die linearen und verzweigten Polysilane können anhand der allgemeinen Formel II SiₙCl₂ₙ₊₂ mit n grösser gleich 2 sowie die cyclischen Polysilane anhand der allgemeinen Formel III SiₙCl₂ₙ mit n grösser gleich 3 beschrieben werden. Idealisiert lassen sich hochmolekulare Polysilane über die Formel IV SiₙCl₂ₙ mit n grösser gleich 3 als auch anhand der Formel V mit weiter reduziertem Wasserstoffanteil beschreiben ((SiH_{<2})ₙ). Unter Polysilanen gemäß der Erfindung werden sowohl einzelne Polysilane als auch Gemische von Polysilanen der allgemeinen Formeln II, III, IV und/oder V mit n größer gleich 2 bis 100 erfasst, insbesondere mit n größer gleich 2 bis 25, bevorzugt mit 4 bis 25, besonders beovrzugt mit n gleich 4 bis 15, wobei die Polysilane bevorzugt unter den Verfahrensbedingungen flüssig bis hochviskos sind. Daher umfassen die Polysilane entsprechend der Erfindung vorzugsweise Gemische hoch- bis höchstreine Silane ausgewählt aus Disilan, Trisilan, Tetrasilan, Pentasilan, Hexasilan, Heptasilan, Octasilan, Nonasilan, Decasilan, Undecasilan, Dodecasilan, Tridecasilan, Tetradecasilan, Pentadecasilan, Cyclopentasilan, Cyclohexasilan, sowie jeweils deren Strukturisomere als auch hochmolekulare Polysilane bis vorzugsweise n kleiner gleich 25, wobei das Polysilan mindestens Tetrasilan und/oder Pentasilan umfasst.

Ein besonderer Vorteil des erfindungsgemässen Verfahrens ist die Möglichkeit der direkten Weiterverarbeitung der Polysilane zur Abscheidung von hochreinen Siliziumschichten mit Solarsiliziumqualität als auch Halbleiterqualität ohne zusätzliche Reinigungsschritte. Es erfolgt lediglich eine Trennung des Polysilangemisches in die einzelnen Polysilane mittels destillativer Aufarbeitung, um definierte Produkteigenschaften der Polysilane bei der Weiterverarbeitung sicherzustellen. Erfindungsgemäß sind diese Polsilane im Wesentlichen frei von Halogenen, insbesondere sind sie im Wesentlichen chlorfrei, bevorzugt ist ihr Gehalt an Chlor unter 1x10⁵ Gew.-%, besonders bevorzugt unter 1x10⁻⁶ Gew.-% bis hin zur Nachweisgrenze von 1x10⁻¹⁰ Gew.-%. Die erfindungsgemäß erhältlichen Polysilane sind somit frei von Halogen, wie Chlor.

Gegenstand der Erfindung ist somit ein Verfahren zur Herstellung von Polysilanen und Polysilangemischen i) wobei ein Strom von Edukten umfassend Monosilan der allgemeinen Formel I und Wasserstoff im Gasgemisch, ii) nicht-thermischen Plasmen bei einem Druck zwischen 0,1 mbar_{abs.} bis 1000 mbar_{abs.} ausgesetzt wird, bevorzugt bei einem Druck zwischen 1 mbar_{abs.} bis 950 mbar_{abs.}, und iii) in der resultierenden Phase ein Verhältnis des Wasserstoffpartialdrucks zum Partialdruck der unter den gewählten Bedingungen gasförmigen Silane, insbesondere zum Partialdruck des Monosilans, eingestellt wird, und Polysilangemische gewonnen werden, wobei der Druck im Verfahrensschritt iii) gegenüber dem Druck in der Verfahrensstufe ii) erhöht ist und iv) das Polysilangemisch destilliert wird.

Als Edukte werden hoch- bis höchstreines Monosilan und Wasserstoff eingesetzt, die vorzugsweise jeweils dem folgenden Verunreinigungsprofil entsprechen. Als Gesamtverunreinigung weist das Monosilan oder der Wasserstoff kleiner gleich 100 Gew.-ppm bis 1 Gew.-ppt auf, insbesondere bis zur Nachweisgrenze, bevorzugt kleiner gleich 50 Gew.-ppm, weiter bevorzugt kleiner gleich 25 Gew.-ppm. Die Gesamtverunreinigung umfasst dabei eine Verunreinigung mit Bor, Phosphor und metallischen Elementen, die nicht Silizium entsprechen. Besonders bevorzugt ist die Gesamtverunreinigung jeweils unabhängig für das Monosilan und den Wasserstoff für die nachfolgend genannten Elemente kleiner gleich: Aluminium von 15 Gew.-ppm bis 0,0001 Gew.-ppt, und/oder
a. Bor von 5 bis 0,0001 Gew.-ppt,
   bevorzugt im Bereich von 3 Gew.-ppm bis 0,0001 Gew.-ppt, und/oder
b. Calcium von 2 Gew.-ppm bis 0,0001 Gew.-ppt, und/oder
c. Eisen von 5 Gew.-ppm bis 0,0001 Gew.-ppt,
   bevorzugt von 0,6 Gew.-ppm bis 0,0001 Gew.-ppt, und/oder
d. Nickel von 5 Gew.-ppm bis 0,0001 Gew.-ppt,
   bevorzugt von 0,5 Gew.-ppm bis 0,0001 Gew.-ppt, und/oder
e. Phosphor von 5 Gew.-ppm bis 0,0001 Gew.-ppt,
   vorzugsweise von 3 Gew.-ppm bis 0,0001 Gew.-ppt, und/oder
f. Titan kleiner gleich 10 Gew.-ppm,
   vorzugsweise kleiner gleich 2 Gew.-ppm, weiterhin bevorzugt
   von 1 Gew.-ppm bis 0,0001 Gew.-ppt,
   besonders bevorzugt von 0,6 Gew.-ppm bis 0,0001 Gew.-ppt,
   ganz besonders bevorzugt von 0,1 Gew.-ppm bis 0,0001 Gew.-ppt, und/oder
g. Zink kleiner gleich 3 Gew.-ppm,
   bevorzugt von 1 Gew.-ppm bis 0,0001 Gew.-ppt,
   besonders bevorzugt von 0,3 Gew.-ppm bis 0,0001 Gew.-ppt,
h. Kohlenstoff und/oder
i Halogene,
wobei die Konzentrationen i und j jeweils im Bereich der Nachweisgrenze des dem Fachmann bekannten jeweiligen Messverfahrens liegen.

Es wurde gefunden, dass bei einem gegebenen Strom von Edukten mit einem Verhältnis an Wasserstoff und Silan jeweils in Volumenprozent (Vol.-%) von 15 : 1 bis 1 : 5, bevorzugt zwischen 10 : 1 bis 5 : 1, besonders bevorzugt zwischen 10 : 1 bis 8 : 1, weiter bevorzugt bei etwa 90 Vol.-% Wasserstoff und 10 Vol.-% Monosilan, d.h. bei einem Verhältnis von etwa 9:1, die besten Ausbeuten an Polysilanen erhalten werden, wenn der Druck im Gasentladungsreaktor zwischen 10 bis 60 mbar_{abs.} beträgt.

So konnte für einen Strom von Edukten von 90 Vol.-% Wasserstoff und 10 Vol.-% Monosilan nach Durchströmen zweier Gasentladungsanordnungen nicht-thermischer Plasmen bei einem Druck von 10 mbar_{abs.} Polysilan bei kontinuierlicher Betriebsweise erhalten werden. Wird der Druck leicht weiter erhöht, kann die Ausbeute weiter gesteigert werden.

Gemäß einer besonders bevorzugten Verfahrensführung wird der Strom von Edukten im Verfahrensschritt ii) zwei bis zehn Gasentladungen ausgesetzt. Generell kann es bevorzugt sein, wenn der Strom von Edukten mehrere Gasentladungsanordnungen nicht-thermischer Plasmen durchströmt, insbesondere 2, 3, 4, 5, 6, 7, 8, 9 oder 10 nicht-thermische Plasmen, bevorzugt sind 2 bis 4 Plasmen. Je nach angestrebter Molekulargewichtsverteilung der Polysilane wird der Strom von Edukten mit einer größeren Anzahl oder geringeren Anzahl nicht-thermischer Plasmen in Kontakt gebracht. Zur Herstellung von Polysilanen mit hohem Molekulargewicht wird der Strom von Edukten mit mehreren in Reihe geschalteten nicht-thermischen Plasmen in Kontakt gebracht.

Zur optimalen Durchführung des Verfahrens wird der Strom von Edukten bevorzugt in Schritt ii) bei einem Druck von 5 mbar_{abs.} bis 100 bar_{abs.}, besonders bevorzugt von 7,5 mbar_{abs.} bis 100 mbar_{abs.}, weiter bevorzugt von 10 mbar_{abs.} bis 80 mbar_{abs.} nicht-thermischen Plasmen in einem Temperaturbereich von - 60 °C bis 10 °C ausgesetzt, vorzugsweise von -40 bis 0 °C, weiter bevorzugt um -10 °C plus/minus 5 °C.

Ebenso ist es bevorzugt, wenn im Verfahrensschritt ii) die Gasentladung bei
einem Druck zwischen 0,1 mbar_{abs.} bis 1000 mbar_{abs.}. erfolgt,
bevorzugt von 0,1 bis 800 mbar_{abs.},
besonders bevorzugt von 1 mbar_{abs.} bis 100 mbar_{abs.}
Weiter bevorzugt ist ein
Druckbereich von 10 bis 100 mbar_{abs.},
vorzugsweise von 10 bis 80 mbar_{abs.}
Dabei ist es weiter bevorzugt, wenn die Gasentladungen, insbesondere die nicht-thermischen Plasmen, im Schritt ii) in einem Temperaturbereich von -60 °C bis 10 °C betrieben werden.

Zur Herstellung der Polysilane werden die Reaktionsbedingungen der nicht-thermischen Plasmen selektiv auf die Anregung und Spaltung der Si-H-Bindung oder von Si-Si-Bindungen eingestellt. Innerhalb der bevorzugten Druck- und Temperaturbereiche kann das nichtthermische Plasma selektiv die Si-H-Bindung und/oder die Si-Si-Bindungen so weit anregen, dass es selektiv zur Radikalbildung und anschließend zur Rekombination mit anderen Radikalen kommt. Unter den gewählten Verfahrensbedingungen werden bevorzugt Silylradikale (SiH₃-Radikale), SiH₂-Radikale und entsprechende Radikale der gebildeten Polysilane gebildet. Durch Rekombination und Kettenwachstum der vorgenannten Radikale können verzweigte Polysilane erhalten werden.

Es wird vermutet, dass es bei einer mittleren Elektronenenergie von 5 eV im schwach ionisierenden nicht-thermischen Plasma zur selektiven Bildung von Silylradikalen durch Anregung und Spaltung der Si-H-Bindung kommt. Für einen weiteren Kettenaufbau findet vermutlich eine Insertion von SiH₂-Radialen in Si-H oder Si-Si-Bindungen von Disilanen, Trisilan, Tetrasilan, und höheren Silanen statt. Ist der Energieeintrag zu hoch, beispielsweise im Bereich von 12,3 eV, dann würden statt einer selektiven Radikalbildung unerwünschte SiH₃⁺-Ionen gebildet werden. Diese würden zerfallen und zur Abscheidung von Silizium führen. Für eine hohe Polysilanausbeute ist es daher entscheidend, die Prozessbedingungen der nicht-thermischen Plasmen optimal auf die selektive Radikalbildung und die Möglichkeiten zur Rekombination zu Polysilanen einzustellen und zugleich die Bildung weiterer Zerfallsprodukte zu unterbinden. Dies gelingt bei optimal aufeinander abgestimmtem Druck und Energieeintrag.

Das dabei gebildete Polysilangemisch kann anschließend über eine geeignete Temperatur- und Druckeinstellung, insbesondere nach Schritt III) auskondensiert werden, indem der Druck mittels eines Verdichters auf einen Druck von 0,1 bar_{abs.} bis 100 bar_{abs.}, insbesondere von 1 bar_{abs.} bis 100 bar_{abs.}, vorzugsweise von 1 bis 10 bar_{abs.}, und in einem Temperaturbereich von - 60 °C bis 20 °C eingestellt wird. Zur vollständigen Abtrennung wird bevorzugt eine zweistufige Verfahrensweise angewendet, in der in einem ersten Teilschritt am Kondensator eine Temperatur im Bereich von -20 bis 300 °C bei einem Druck zwischen 0,1 bis 10 bar_{abs.} eingestellt wird und nachfolgend im Rohproduktbehälter oder Rohproduktablass bei vorzugsweise gleichem Druck von - 20 bis 40 °C die vollständige Abtrennung durch Kondensation der Polysilane aus der resultierenden Phase erfolgt.

Diese resultierende Phase wird vorzugsweise mit einer für Wasserstoff permeablen Membran in Kontakt gebracht, wobei sich ein definiertes Verhältnis des Wasserstoffpartialdrucks zum Partialdruck der unter den gewählten Bedingungen gasförmigen Silane, insbesondere des nicht umgesetzten Monosilans, einstellen kann. Die auf diese Weise behandelte resultierende Phase wird nach der teilweisen Abtrennung von Wasserstoff erneut dem Strom von Edukten, welchem weiteres Monosilan zudosiert werden kann, zum nichtthermischen Plasma geführt.

Nach dem erfindungsgemässen Verfahren werden lineare, verzweigte und/oder cyclische Polysilane umfassend Tetrasilan, Pentasilan und/oder Hexasilan erhalten, die vorzugsweise bereits hoch- oder höchstrein entsprechend nachstehender Definition als Polysilangemisch erhalten werden können. Mittels Destillation können die Polysilane auf einfache Weise in die einzelnen Polysilane getrennt werden.

Die vorstehend genannte Verfahrensweise erlaubt die einfache Rückführung von nicht umgesetztem Edukt der allgemeinen Formel I, das nach Bedarf erneut dem nicht-thermischen Plasma zugeführt werden kann. Zur vollständigen Umsetzung des eingesetzten Monosilans zu Polysilanen werden vorzugsweise zwei bis fünf nicht-thermische Plasmen im Schritt ii) durchlaufen, wobei das Verfahren zusätzlich als Kreisprozess betrieben werden kann, indem die Verfahrensschritte i), ii) und iii) durchlaufen werden. Das mittels der Umsetzung im nicht-thermischen Plasma erhaltene Polysilan kann bereits über die Verfahrensschritte i, ii) und iii) rein erhalten werden. Eine Auftrennung und ggf. zusätzliche weitere Aufreinigung der Silane kann anschließend kontinuierlich oder diskontinuierlich destillativ erfolgen. Die destillative Aufarbeitung kann je nach erhaltenem Produktgemisch mit einer Kolonne oder bevorzugt in einem Mehrkolonnensystem erfolgen, wenn verschiedene Polysilane aufgetrennt werden sollen.

Das erfindungsgemäße Verfahren liefert Pentasilan, das in höchster Reinheit von den übrigen Polysilanen isoliert werden kann. In einem ²⁹Si-NMR-Spektrum sind neben dem Signal des Pentasilans keine weiteren Produkte nachweisbar. Die Verunreinigung des Polysilans, insbesondere des Pentasilans, mit anderen Metallverbindungen liegt im Bereich von 1000 Gew.-ppb bis 100 Gew.-ppt, bevorzugt weniger. Ein besonderer Vorteil der nach dem erfindungsgemäßen Verfahren hergestellten Polysilane ist, dass sie frei von Chloriden und/oder sonst üblicherweise verwendeten Katalysatorrückständen sind.

Besonders bevorzugt ist das erhaltene Polysilan sowie die jeweils isolierten einzelnen Polysilane höchstrein und weist in Summe jeweils eine Gesamtverunreinigung von kleiner gleich 100 Gew.-ppm bis zur Nachweisgrenze, insbesondere bis 1 Gew.-ppt auf, bevorzugt ist die Gesamtverunreinigung kleiner gleich 50 Gew.-ppm. Als Gesamtverunreinigung gilt eine Verunreinigung mit Bor, Phosphor und metallischen Elementen, die nicht Silizium entsprechen. Besonders bevorzugt ist die Gesamtverunreinigung des Polysilans für die nachfolgend genannten Elemente kleiner gleich:
aa.Aluminium von 15 Gew.-ppm bis 0,0001 Gew.-ppt, und/oder
bb. Bor von 5 bis 0,0001 Gew.-ppt,
   bevorzugt im Bereich von 3 Gew.-ppm bis 0,0001 Gew.-ppt, und/oder
cc. Calcium kleiner 2 Gew.-ppm,
   bevorzugt von 2 Gew.-ppm bis 0,0001 Gew.-ppt, und/oder
dd. Eisen von 5 Gew.-ppm bis 0,0001 Gew.-ppt,
   vorzugsweise von 0,6 Gew.-ppm bis 0,0001 Gew.-ppt, und/oder
ee. Nickel von 5 Gew.-ppm bis 0,0001 Gew.-ppt,
   vorzugsweise von 0,5 Gew.-ppm bis 0,0001 Gew.-ppt, und/oder
ff. Phosphor von 5 Gew.-ppm bis 0,0001 Gew.-ppt,
   bevorzugt von 3 Gew.-ppm bis 0,0001 Gew.-ppt, und/oder
gg. Titan kleiner gleich 10 Gew.-ppm,
   kleiner gleich 2 Gew.-ppm,
   bevorzugt von 1 Gew.-ppm bis 0,0001 Gew.-ppt,
   weiter bevorzugt von 0,6 Gew.-ppm bis 0,0001 Gew.-ppt,
   besonders bevorzugt von 0,1 Gew.-ppm bis 0,0001 Gew.-ppt, und/oder
hh. Zink kleiner gleich 3 Gew.-ppm,
   bevorzugt von 1 Gew.-ppm bis 0,0001 Gew.-ppt,
   weiter bevorzugt von 0,3 Gew.-ppm bis 0,0001 Gew.-ppt,
ii. Kohlenstoff, und/oder
jj. Halogene,
wobei für jedes Element aa bis jj eine Reinheit im Bereich der Nachweisgrenze bei den dem Fachmann bekannten Messverfahren bevorzugt wird. Die Bestimmung der Gesamtverunreinigung mit den vorgenannten Elementen erfolgt vorzugsweise mittels ICP-MS. Insgesamt kann der Prozess kontinuierlich mittels online-Analytik überwacht werden. Die geforderte Reinheit kann mittels GC, IR, NMR, ICP-MS oder durch Widerstandsmessung bzw. GC-MS nach Abscheidung des Si überprüft werden.

Zusätzlich oder alternativ zu einem der vorgenannten Merkmale ist es bevorzugt, im Verfahrensschritt iii) die resultierende Phase auf einen Druck von 0,05 bar_{abs.} bis 100 bar_{abs.} einzustellen, beispielsweise auf 0,1 bis 100 bar_{abs.}, vorzugsweise auf einen Druck von 1 bar_{abs}. bis 100 bar_{abs.}, weiter bevorzugt auf einen Druck von 0,5 bar_{abs.}, besonders bevorzugt auf 1 bar_{abs.} bis 60 bar_{abs.}. Besonders bevorzugt ist ein Druck von 1 bis 10 bar_{abs.}.

Als Wasserstoff permeable Membran kann vorzugsweise eine Membran im Verfahren und/oder in der Anlage eingesetzt werden, die die folgenden Materialien umfasst: Quarz, geeignetes Metall, geeignete metallische Legierung, Keramik, Zeolith, organisches Polymer und/oder eine Kompositmembran umfassend einen mindestens zweischichtigen Aufbau mit einem oder mehreren der vorgennannten Materialien. Um als Material für die Wasserstoff permeable Membran geeignet zu sein, ist es notwendig, dass das Material, z. B. Quarz oder Palladium, mit oder ohne Silber, Poren einer definierten Größe aufweist, durch die Wasserstoff diffundieren kann, und die im Wesentlichen undurchlässig für Monosilan sind. Eine bevorzugt einsetzbare Membran kann beispielsweise eine Keramikmembran mit einem Schichtaufbau umfassen, die eine erste mikroporöse Schicht mit Poren kleiner 2 nm aufweist, an die sich eine mesoporöse Schicht mit Poren von 3 bis 10 nm anschließt. Vorzugsweise kann eine makroporöse Schicht mit großen Poren bis 100 nm vorgesehen sein. Dabei ist es bevorzugt, dass die makroporöse Schicht ein poröses keramisches Material oder ein gesintertes Metall ist.

Geeignete Membranen können bevorzugt die folgenden Materialien umfassen: Palladium, eine Palladiumlegierung, wie PdAI, PdCu, Quarz und/oder ein organisches synthetisches Polymer, wie vorzugsweise Hohlfasermembranen, wobei die Membranen bevorzugt für Wasserstoff permeabel sind. Bevorzugte Hohlfasermembranen können aus Polyamiden, Polyimiden, Polyamid-imiden oder auch aus Mischungen dieser hergestellt sein. Sofern eine Palladiummembran gewählt wird, kann sie beispielsweise durch chemische Gasphasenabscheidung, elektrochemischer Abscheidung, Hochgeschwindigkeitsflammspritzen oder physikalischer Gasphasenabscheidung, dem sogenannten Elektronenstrahlverdampfen oder dem sogenannten Sputtern hergestellt werden.

Aufgrund der hohen Reinheitsanforderungen in Bezug auf eine Verunreinigung mit metallischen Elementen wird eine höchstreine Quarzmenbram im Verfahren und/oder in der Anlage bevorzugt genutzt. Diese Membran sollte eine Druckstabilität größer 1 bar_{abs.}, vorzugsweise größer 2 bar_{abs.}, besonders bevorzugt größer 3 bar_{abs.} aufweisen und kann vorzugsweise auf einem porösen Si-Träger oder Aluminiumoxid-Träger aufgebracht sein. Entsprechendes gilt für Palladium basierte Membranen, die aus einer Palladium-Aluminium-, Palladium-Silber-, oder Palladium-Kupfer-Legierung hergestellt sein können, und vorzugsweise eine Druckstabilität größer 3 bar_{abs.} auf einem porösem Si-Träger, einem sogenanten Lochmaskenträger oder Aluminiumoxid-Träger aufweisen.

Jedes nichtthermische Plasma basiert auf anisothermem Plasma. Es wird in einem PlasmaReaktor erzeugt, in dem eine plasmaelektrische Stoffumwandlung induziert wird. Für diese Plasmen ist eine hohe Elektronentemperatur Tₑ > 10⁴ K und relativ niedrige Gastemperatur T_{G} ≈ 10³ K charakteristisch. Die für die chemischen Prozesse notwendige Aktivierungsenergie erfolgt überwiegend über Elektronenstöße. Typische nichtthermische Plasmen können beispielsweise durch Glimmentladung, HF-Entladung, Hohlkathodenentladung oder Koronarentladung erzeugt werden. Der Arbeitsdruck, bei dem die erfindungsgemässe Plasmabehandlung durchgeführt wird, liegt vorzugsweise im Bereich von 1 bis 1000 mbar_{abs.}, wobei die zu behandelnde Phase vorzugsweise auf eine Temperatur von -40 °C bis 10 °C, eingestellt ist. Für die Definition des nichtthermischen Plasmas und der homogenen Plasmakatalyse wird auf die einschlägige Fachliteratur verwiesen, wie beispielsweise auf "Plasmatechnik: Grundlagen und Anwendungen - Eine Einführung"; Autorenkollektiv, Carl Hanser Verlag, München/Wien; 1984, ISBN 3-446-13627-4.

Gleichfalls Gegenstand der Erfindung ist eine Anlage, insbesondere zur Durchführung des vorgenannten Verfahrens, die eine Vorrichtung umfassend mindestens zwei Reaktoren, insbesondere zwei in Reihe geschaltete Reaktoren, zur Erzeugung von Gasentladungen aufweist, der stromaufwärts eine Eduktzuführung und stromabwärts eine Wassersstoff durchlässige Membran zugeordnet ist, um ein definiertes Verhältnis des Wasserstoffpartialdrucks zum Partialdruck der gasförmigen Silane in der resultierenden Phase einzustellen, ferner weist die Anlage mindestens eine weitere Vorrichtung zur Auftrennnung der Polysilane auf, wobei die weitere Vorrichtung bevorzugt eine Kolonne zur destillativen Aufarbeitung der Polysilane ist. Vorzugsweise weist die Anlage ein Mehrkolonnensystem mit mindestens 2 Kolonnen, bevorzugt mit 2 bis 5 Kolonnen auf.

Zusätzlich zu den zwei Reaktoren kann die Anlage auch einen oder mehrere weitere Reaktoren aufweisen, die in Reihe und/oder parallel geschaltet werden. Bevorzugt können 2, 3, 4, 5, 6, 7, 8, 9 oder 10 Reaktoren in Reihe geschaltet werden. Erfindungsgemäss sind die Reaktoren vorzugsweise Ozonisatoren. Ein grosser Vorteil besteht in der alternativ möglichen Verwendung von handelsüblichen Ozonisatoren, so dass die Investitionskosten wesentlich gesenkt werden. Die Reaktoren der Erfindung sind zweckmässig mit Glasrohren, insbesondere mit Quarzglasrohren ausgestattet, wobei die Rohre bevorzugt parallel bzw. koaxial angeordnet und mittels Spacern aus inertem Material beabstandet sind. Als inertes Material eignet sich insbesondere Teflon, Glas sowie generell Low-K-Materialien, die eine geringe Dielektrizitätskonstante aufweisen. Als Materialien mit einer geringen Dielektrizitätskonstante gelten jene, deren Dielektrizitätskonstanten kleiner gleich 9 sind. Alternativ können die Reaktoren statt mit Glasrohen auch mit röhrenförmigen, dielektrischen Komponenten ausgestattet sein. Es ist bekannt, dass die eingekoppelte Elektronenenergie für die Plasmaentladung "E" abhängig vom Produkt aus Druck "p" und Elektrodenabstand "d" (p·d) ist. Für das erfindungsgemässe Verfahren liegt das Produkt aus Elektrodenabstand und Druck in der Regel im Bereich von 0,001 bis 300 mm·bar, vorzugsweise von 0,05 bis 100 mm·bar, besonders bevorzugt von 0,08 bis 0,3 mm·bar, insbesondere bei 0,1 bis 0,2 mm·bar. Die Entladung kann mittels verschiedenartiger Wechselspannungen oder gepulster Spannungen von 1 bis 10⁶ V angeregt werden. Dabei kann der Kurvenverlauf der Spannung u. a. rechteckig, trapezförmig, gepulst oder stückweise aus einzelnen zeitlichen Verläufen zusammengesetzt sein. Besonders geeignet sind pulsförmige Anregungsspannungen, sie ermöglichen eine gleichzeitige Ausbildung der Entladung im gesamten Entladungsraum des Reaktors. Die Impulsdauer beim Pulsbetrieb richtet sich nach der Zusammensetzung, der Verweildauer und dem Druck des Strom von Edukten. Sie liegt bevorzugt zwischen 10 ns und 1 ms. Bevorzugte Spannungsamplituden liegen bei 10 Vp bis 100 kVp, bevorzugt 100 Vp bis 10 Vp, insbesondere bei 50 bis 5 Vp, in einem Mikrosystem. Die Frequenz der Wechselspannung kann zwischen 10 MHz und 10 ns-lmpulsen (Tastverhältnis 10 : 1) bis zu niedrigen Frequenzen im Bereich von 10 bis 0,01 Hz eingestellt werden. Beispielsweise kann am Reaktor eine Wechselspannung mit einer Frequenz von 1,9 kHz und einer Amplitude von 35 kV "Peak to Peak" angelegt werden. Der Leistungseintrag beträgt ungefähr 40 W.

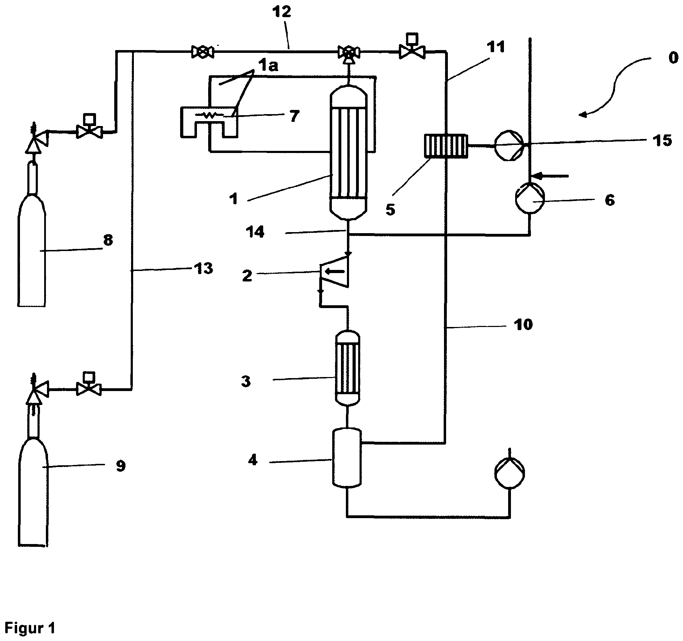

Ebenfalls Gegenstand der Erfindung ist eine bevorzugte Anlage 0, wie in **Figur 1** dargestellt, der stromabwärts der Vorrichtung 1 mit mindestens zwei Reaktoren 1a ein Verdichter 2 zur Erhöhung des Drucks der resultierenden Phase zugeordnet ist, insbesondere ist der Verdichter 2 zwischen der Vorrichtung 1 und der Membran 5 vorgesehen. Der Verdichter erhöht den Druck der resultierenden Phase nach Austritt aus dem Reaktor, beispielsweise von etwa 60 mbar_{abs.} auf 2,5 bar_{abs.}. Die verdichtete resultierende Phase wird anschließend über einen stromabwärts angeordneten Kondensator 3 geleitet, um das gebildete Polysilan zu kondensieren, während nicht umgesetztes Monosilan und ggf. Disilan oder weitere unter den Bedingungen gasförmige Silane und Wasserstoff in der Gasphase verbleiben.

Somit umfasst eine besonders bevorzugte Anlage 0 gemäß **Figur 1** stromabwärts der Vorrichtung 1 mit mindestens zwei Reaktoren 1a einen Verdichter 2, dem ein Kondensator 3 zugeordnet ist und dem Kondensator 3 ist stromabwärts ein Rohproduktablass 4 oder Rohproduktbehälter 4 zugeordnet. Weiter ist stromabwärts des Kondensators 3, insbesondere an oder hinter dem Produktbehälter 4 die Membran 5 zur Einstellung des Wasserstoffpartialdrucks der resultierenden Phase vorgesehen. Die resultierende Phase wird mit der Membran 5 in Kontakt gebracht und anschließend ein Strom von Edukten erhalten, der mittels einer Leitung 11, die stromaufwärts der Vorrichtung 1 zugeordnet ist, in die Vorrichtung überführt. Diesem Strom von Edukten kann weiteres Monosilan aus der Monosilanquelle 9 zudosiert werden, um entweder den Gehalt an Monosilan in Vol.-% einzustellen oder auch den Druck des Strom von Eduktens zu regulieren. Eine Vakuumpumpe 6, die dem Reaktor zugeordnet ist, kann zum Anfahren des Verfahrens und zur Regulierung des Druckes während der laufenden Umsetzung genutzt werden.

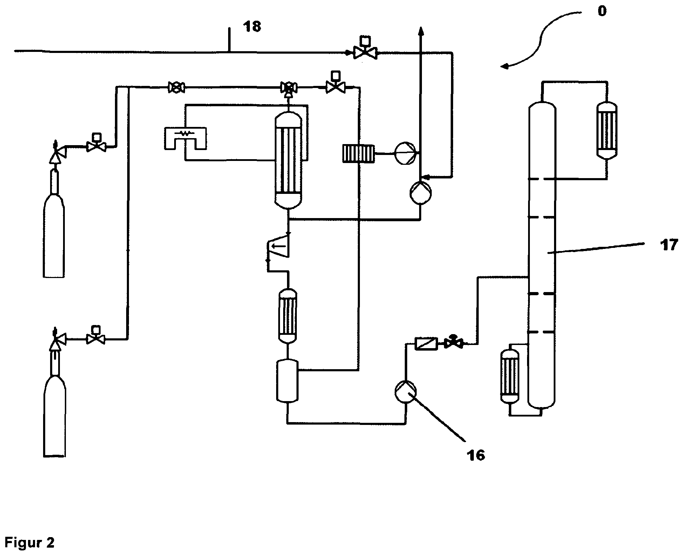

In einer bevorzugten Ausführungsform, die in **Figur 2** dargestellt ist, schliesst sich an den Rohproduktbehälter bzw. den Rohproduktablass eine Vorrichtung 17 zur Auftrennung der Polysilane, vorzugsweise eine Kolonne 17 oder ein Mehrkolonnensytem 17 an, besonders bevorzugt eine Rektifikationskolonne, zur fraktionierten Destillation des Rohproduktgemisches. Zur vollständigen Auftrennung der Poylsilane wird vorzugsweise ein Mehrkolonnensystem genutzt. Sofern sinnvoll, kann der Kolonne oder dem Mehrkolonnensystem eine Produktförderpumpe vorgeschaltet sein. Am Kolonnenkopf können als Leichtsieder vorzugsweise höchstreines Tetrasilan, Pentasilan und/oder Hexasilan und am Sumpf höchstreine höhermolekulare Polysilane, wie Heptasilan, Ocatsilan als Schwersieder erhalten werden. Zur weiteren Auftrennung der Silane kann ein dem Fachmann geläufiges Mehrkolonnensystem eingesetzt werden.

Eine besonders bevorzugte Anlage 0 weist eine Anordnung der vorgenannten Anlagenteile auf, um die Durchführung eines Kreisprozesses des vorstehend genannten Verfahrens zu ermöglichen. In dieser Anlage 0 ist der Vorrichtung 1, umfassend mindestens zwei Reaktoren 1a, stromabwärts ein Verdichter 2 zugeordnet, wie in **Figur 1** dargestellt. Die Vorrichtung ist vorzugsweise vertikal über dem Kondensator angeordnet. Dem Verdichter 2 ist ein Kondensator 3 zugeordnet und stromabwärts des Kondensators 3 weist die Anlage die Wasserstoff durchlässige Membran 5 auf, wobei der einen Seite der Membran 5 und dem Reaktor 1 eine Leitung 12 zugeordnet ist, ferner ist stromabwärts des Kondensators 3 ein Produktablass 4 oder Produktbehälter 4 vorgesehen; und an einer anderen Seite der Membran 5 wird ausgeschleuster Wasserstoff durch eine weitere Leitung 15 abgeführt, dem eine Intergasleitung zur Wasserstoffabtrennung zugeordnet sein kann.

Das folgende Beispiel erläutert das erfindungsgemäße Verfahren näher.

### Beispiel 1:

Monosilan wurde kontinuierlich aus einer Druckgasflasche 9 mittels einer Druckregelung über die Eduktzuführung 12 in die vertikale Vorrichtung 1 mit in Reihe geschalteten Ozonisatoren 1a verdampft und über die Gasentladungstrecken mit Dielektrikum der Ozonisatoren geführt. Die nichtthermischen Plasmen in den Ozonisatoren wurden bei minus 10 °C und bei 60 mbar_{abs.} betrieben. Der Strom von Edukten bestand zu 10 Vol.-% aus Monosilan und zu 90 Vol.-% aus Wasserstoff. Während der Plasmabehandlung erfolgte die Bildung von Silylradikalen und höheren Radikalen, die unter Bildung von Poylsilanen abreagierten und zusammen mit nicht umgesetzten Edukten die resultierende Phase bildeten. Die unter den Verfahrensbedingungen flüssigen Polysilane liefen nach unten ab. Nach Erhöhen des Drucks der resultierenden Phase auf etwa 2,5 bar_{abs.} wurde sie über einen auf circa 0 °C gekühlten Kondensator 3 geleitet, um gebildete Polysilane vollständig zu kondensieren, die in den auf -40 °C temperierten Rohproduktbehälter 4 abliefen. Die verbliebene gasförmige resultierende Phase wurde über eine Leitung 10 an einer Seite der Membran 5 vorbeigeführt. Wasserstoff der resultierenden Phase diffundierte teilweise durch die Membran 5 und konnte über die Leitung 15 abgeführt werden. An der Membran wurde in der resultierenden Phase ein definiertes Verhältnis des Wasserstoffpartialdrucks zum Partialdruck des unter den gewählten Bedingungen gasförmigen Monosilans eingestellt. Durch diese Massnahme wurde aus der resultierenden Phase ein Strom von Edukten der erneut den Gasentladungsstrecken mit Dielektrikum der Ozonisatoren nach Zudosierung weiteren Monosilans zugeführt.

Im Rohproduktbehälter wurden Polysilane als Gemisch mit erhöhten Anteilen an Tetrasilan und Pentasilan angereichert, die von der Produktpumpe 16 zur Destillationskolonne 17 gepumpt wurden, um dort fraktioniert destilliert zu werden.

Durch kontinuierliche, fraktionierte Destillation wurden höchstreines Tetrasilan als Leichtsieder am Kopf der Kolonne 17 und Pentasilan im Gemisch mit höhermolekularen Polysilanen als Schwersieder am Sumpf der Kolonne abgezogen. Das Pentasilan wurde an einer zweiten Kolonne höchstrein am Kopf der Kolonne erhalten.

Die generelle Verfahrensführung des Beispiels 1 ist nicht beschränkt auf die konkret genannten Verfahrensparameter, sondern kann entsprechend der Beschreibung verallgemeinert werden. Die **Figur 1** zeigt eine schematische Darstellung einer Anlage 0 zur Durchführung eines Kreisprozesses. **Figur 2** zeigt eine schematische Darstellung einer Anlage 0 mit Vorrichtung 17 zur Auftrennung der Polysilane, hier eine Destillationskolonne 17.

### Bezugszeichenliste:

- 0: Anlage
- 1: Vorrichtung umfassend mindestens zwei Reaktoren
- 1a: Reaktor(en), Ozonisator(en)
- 2: Verdichter
- 3: Kondensator
- 4: Rohproduktablass oder Rohproduktbehälter
- 5: Membran
- 6: Vakuumpumpe
- 7: Umrichter für Plasmaerzeugung
- 8: Wasserstoffquelle - Anfahren des Verfahrens
- 9: Monosilanquelle
- 10: Leitung/resultierende Phase
- 11: Leitung/Eduktzuführung
- 12: Leitung/Eduktzuführung
- 13: Leitung/Monosilan
- 14: Leitung/resultierende Phase
- 15: Leitung/Wasserstoff
- 16: Produktförderpumpe
- 17: Vorrichtung zur Auftrennung von Polysilanen (Kolonne - fraktionierte Destillation)

## Patentansprüche

1. Verfahren zur Herstellung von Polysilanen mit mindestens zwei über eine kovalente Einfachbindung aneinander gebundene Silziumatomen, indem
i) ein Strom von Edukten umfassend Monosilan der allgemeinen Formel I 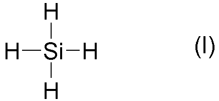 und Wasserstoff, und
der Strom von Edukten ein Verhältnis an Wasserstoff und
Monosilan in Volumenprozent (Vol.-%) von 15 : 1 bis 1 : 5 aufweist,
ii) mindestens einer Gasentladung ausgesetzt wird und
iii) ein Polysilangemisch aus der resultierenden Phase gewonnen wird,
und in der resultierenden Phase das definierte Verhältnis des Wasserstoffpartialdrucks zum Partialdruck der unter den gewählten Bedingungen gasförmigen Silane
mittels einer Wasserstoff durchlässigen Membran
eingestellt wird, und
iv) das Polysilangemisch aufgetrennt wird.

2. Verfahren nach Anspruch 1,
**dadurch gekennzeichnet,**
**dass** der Druck im Verfahrensschritt iii) gegenüber dem Druck in Verfahrensstufe ii) erhöht ist.

3. Verfahren nach einem der Ansprüche 1 oder 2,
**dadurch gekennzeichnet,**
**dass** im Verfahrensschritt iii) die resultierende Phase einen Druck von 1 bar_{abs.} bis 100 bar_{abs.} aufweist.

4. Verfahren nach einem der Ansprüche 1 bis 3,
**dadurch gekennzeichnet,**
**dass** im Verfahrensschritt ii) das Monosilan in Gegenwart von Wasserstoff bei einem Druck von 0,05 mbar_{abs.} bis 15000 mbar_{abs.}, vorzugsweise bei vermindertem Druck, der Gasentladung ausgesetzt wird.

5. Verfahren nach einem der Ansprüche 1 bis 4,
**dadurch gekennzeichnet,**
**dass** lineare, verzweigte und/oder cyclische Polysilane umfassend Tetrasilan, Pentasilan und/oder Hexasilan erhalten werden.

6. Verfahren nach einem der Ansprüche 1 bis 5,
**dadurch gekennzeichnet,**
**dass** im Verfahrensschritt ii) der Strom von Edukten zwei bis zehn Gasentladungen ausgesetzt wird.

7. Verfahren nach einem der Ansprüche 1 bis 6,
**dadurch gekennzeichnet,**
**dass** im Verfahrensschritt ii) die Gasentladungen im Temperaturbereich von -60 °C und 10 °C erfolgen.

8. Verfahren nach einem der Ansprüche 1 bis 7,
**dadurch gekennzeichnet,**
**dass** der Strom von Edukten in Schritt ii) nicht-thermischen Plasmen ausgesetzt wird.

9. Verfahren nach Anspruch 1,
**dadurch gekennzeichnet,**
**dass** das Polysilangemisch in Schritt iv) mittels Destillation, fraktionierter Kondensation und/oder chromatographisch aufgetrennt wird.

10. Verfahren nach Anspruch 9,
**dadurch gekennzeichnet,**
**dass** die Membran für Wasserstoff permeabel ist und im Wesentlichen für Silane nicht permeabel ist.

11. Anlage (0) zur Durchführung des Verfahrens nach einem der Ansprüche 1 bis 10, **dadurch gekennzeichnet, dass**
sie eine Vorrichtung (1), umfassend mindestens zwei Reaktoren (1a) zur Erzeugung von Gasentladungen, aufweist, der stromaufwärts eine Eduktzuführung (12) und stromabwärts eine Wassersstoff durchlässige Membran (5) zugeordnet ist, um ein definiertes Verhältnis des Wasserstoffpartialdrucks zum Partialdruck der gasförmigen Silane in der resultierenden Phase einzustellen, ferner weist die Anlage (0) mindestens eine weitere Vorrichtung (17) zur Auftrennung der Polysilane auf.

12. Anlage (0) nach Anspruch 11, **dadurch gekennzeichnet, dass**
stromabwärts der Vorrichtung (1) ein Verdichter (2) zur Erhöhung des Drucks der resultierenden Phase zugeordnet ist, insbesondere ist der Verdichter (2) zwischen der Vorrichtung (1) und der Membran (5) vorgesehen, als Vorrichtung (17) weist die Anlage eine Kolonne zur destillativen Aufarbeitung der Polysilane auf.

13. Anlage (0) nach Anspruch 11 oder 12, **dadurch gekennzeichnet, dass**
sie stromabwärts der Vorrichtung (1), umfassend mindestens zwei Reaktoren, einen Verdichter (2) aufweist, dem ein Kondensator (3) zugeordnet ist und dem Kondensator (3) stromabwärts ein Rohproduktablass (4) oder Rohprodukt-behälter (4) zugeordnet ist, stromabwärts des Kondensators (3) ist die Membran (5) zur Einstellung des Wasserstoffpartialdrucks der resultierenden Phase durch in Kontaktbringen der resultierenden Phase mit der Membran (5) angeordnet, wodurch ein Strom von Edukten erhalten wird, der mittels einer Leitung (11) in die Vorrichtung (1) überführt wird, dem Rohproduktablass (4) oder Rohproduktbehälter (4) ist eine Kolonne (17) zugeordnet.

## Claims

1. Process for preparing polysilanes having at least two silicon atoms bonded to one another via a covalent single bond, by
i) subjecting a stream of reactants comprising monosilane of the general formula I 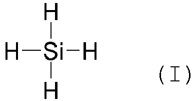 and hydrogen, and
the stream of reactants has a ratio of hydrogen and monosilane in per cent by volume (% by vol.) of 15:1 to 1:5,
ii) to at least one gas discharge and
iii) obtaining a polysilane mixture from the resulting phase, and setting the defined ratio of the partial hydrogen pressure to the partial pressure of the silanes which are gaseous under the conditions selected in the resulting phase by means of a hydrogen-permeable membrane, and
iv) separating the polysilane mixture.

2. Process according to Claim 1,
**characterized in that**
the pressure in process step iii) is elevated relative to the pressure in process stage ii).

3. Process according to either of Claims 1 and 2,
**characterized in that**
the resulting phase in process step iii) has a pressure of 1 bar_{abs.} to 100 bar_{abs.}.

4. Process according to any of Claims 1 to 3,
**characterized in that**
the monosilane in process step ii) is subjected to the gas discharge in the presence of hydrogen at a pressure of 0.05 mbar_{abs.} to 15 000 mbar_{abs.}, preferably under reduced pressure.

5. Process according to any of Claims 1 to 4,
**characterized in that**
linear, branched and/or cyclic polysilanes comprising tetrasilane, pentasilane and/or hexasilane are obtained.

6. Process according to any of Claims 1 to 5,
**characterized in that**
the stream of reactants in process step ii) is subjected to two to ten gas discharges.

7. Process according to any of Claims 1 to 6,
**characterized in that**
the gas discharges in process step ii) are effected within the temperature range from -60°C to 10°C.

8. Process according to any of Claims 1 to 7,
**characterized in that**
the stream of reactants in step ii) is subjected to nonthermal plasmas.

9. Process according to Claim 1,
**characterized in that**
the polysilane mixture in step iv) is separated by means of distillation, fractional condensation and/or by chromatography.

10. Process according to Claim 9,
**characterized in that**
the membrane is permeable to hydrogen and essentially impermeable to silanes.

11. Plant (0) for performance of the process according to any of Claims 1 to 10, **characterized in that** it has an apparatus (1) which comprises at least two reactors (1a) for generation of gas discharges and has a dedicated upstream reactant feed (12) and a dedicated downstream hydrogen-permeable membrane (5), in order to set a defined ratio of the partial hydrogen pressure to the partial pressure of the gaseous silanes in the resulting phase, the plant (0) further having at least one further apparatus (17) for separation of the polysilanes.

12. Plant (0) according to Claim 11, **characterized in that**
the apparatus (1) has a dedicated downstream compressor (2) for increasing the pressure of the resulting phase, the compressor (2) more particularly being provided between the apparatus (1) and the membrane (5), and the plant having a column for distillative workup of the polysilanes as the apparatus (17).

13. Plant (0) according to Claim 11 or 12,
**characterized in that** it has a compressor (2) downstream of the apparatus (1) comprising at least two reactors, with a condenser (3) dedicated to said compressor (2) and a downstream crude product outlet (4) or crude product vessel (4) dedicated to said condenser (3), downstream of which is disposed the membrane (5) for setting the partial hydrogen pressure of the resulting phase by contacting of the resulting phase with the membrane (5), which gives a stream of reactants which is transferred by means of a line (11) into the apparatus (1), with a column (17) dedicated to the crude product outlet (4) or crude product vessel (4).

## Revendications

1. Procédé de fabrication de polysilanes contenant au moins deux atomes de silicium reliés l'un avec l'autre par une simple liaison covalente, selon lequel
i)un courant de réactifs comprenant un monosilane de la formule générale I : 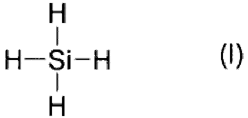 et de l'hydrogène,
le courant de réactifs présentant un rapport entre l'hydrogène et le monosilane en pourcentage en volume (% en volume) de 15:1 à 1:5,
ii) est exposé à au moins une décharge gazeuse, et
iii)un mélange de polysilanes est obtenu à partir de la phase résultante,
et dans la phase résultante, le rapport défini entre la pression partielle d'hydrogène et la pression partielle des silanes gazeux dans les conditions choisies est ajusté au moyen d'une membrane perméable à l'hydrogène, et
iv) le mélange de polysilanes est séparé.

2. Procédé selon la revendication 1, **caractérisé en ce que** la pression à l'étape de procédé iii) est élevée par rapport à la pression à l'étape de procédé ii) .

3. Procédé selon l'une quelconque des revendications 1 ou 2, **caractérisé en ce qu'**à l'étape de procédé iii), la phase résultante présente une pression de 1 bar_{abs} à 100 bar_{abs}.

4. Procédé selon l'une quelconque des revendications 1 à 3, **caractérisé en ce qu'**à l'étape de procédé ii), le monosilane est exposé à la décharge gazeuse en présence d'hydrogène à une pression de 0,05 mbar_{abs} à 15 000 mbar_{abs}, de préférence à une pression réduite.

5. Procédé selon l'une quelconque des revendications 1 à 4, **caractérisé en ce que** des polysilanes linéaires, ramifiés et/ou cycliques comprenant le tétrasilane, le pentasilane et/ou l'hexasilane sont obtenus.

6. Procédé selon l'une quelconque des revendications 1 à 5, **caractérisé en ce qu'**à l'étape de procédé ii), le courant de réactifs est exposé à deux à dix décharges gazeuses.

7. Procédé selon l'une quelconque des revendications 1 à 6, **caractérisé en ce qu'**à l'étape de procédé ii), les décharges gazeuses ont lieu dans la plage de température allant de -60 °C à 10 °C.

8. Procédé selon l'une quelconque des revendications 1 à 7, **caractérisé en ce que** le courant de réactifs est exposé à des plasmas non thermiques à l'étape ii).

9. Procédé selon la revendication 1, **caractérisé en ce que** le mélange de polysilanes est séparé à l'étape iv) par distillation, condensation fractionnée et/ou chromatographie.

10. Procédé selon la revendication 9, **caractérisé en ce que** la membrane est perméable pour l'hydrogène et essentiellement non perméable pour les silanes.

11. Unité (0) pour la réalisation du procédé selon l'une quelconque des revendications 1 à 10, **caractérisée en ce qu'**elle comprend un dispositif (1), comprenant au moins deux réacteurs (1a) pour la génération de décharges gazeuses, auquel est attribué en amont une conduite d'alimentation de réactifs (12) et en aval une membrane perméable à l'hydrogène (5), afin d'ajuster un rapport défini entre la pression partielle d'hydrogène et la pression partielle des silanes gazeux dans la phase résultante, l'unité (0) comprenant en outre au moins un dispositif supplémentaire (17) pour la séparation des polysilanes.

12. Unité (0) selon la revendication 11, **caractérisée en ce qu'**un compresseur (2) pour l'augmentation de la pression de la phase résultante est attribué en aval au dispositif (1), le compresseur (2) étant notamment prévu entre le dispositif (1) et la membrane (5), l'unité comprenant en tant que dispositif (17) une colonne pour le traitement par distillation des polysilanes.

13. Unité (0) selon la revendication 11 ou 12, **caractérisée en ce qu'**elle comprend en aval du dispositif (1), comprenant au moins deux réacteurs, un compresseur (2), auquel un condensateur (3) est attribué, une sortie de produit brut (4) ou un contenant de produit brut (4) étant attribué en aval au condensateur (3), la membrane (5) pour l'ajustement de la pression partielle d'hydrogène de la phase résultante par mise en contact de la phase résultante avec la membrane (5) étant agencée en aval du condensateur (3), un courant de réactifs étant ainsi obtenu, qui est transféré par une conduite (11) dans le dispositif (1), une colonne (17) étant attribuée à la sortie de produit brut (4) ou au contenant de produit brut (4).
